# EUROPEAN PATENT SPECIFICATION

(11) **EP 3 202 522 B1**
(45) Date of publication and mention of the grant of the patent: **16.12.2020**
(21) Application number: 15845828.1
(22) Date of filing: 14.05.2015
(51) Int. Cl.: B23K 23/00, B23K 101/26

(54) **METHOD FOR THE ALUMINO-THERMITE WELDING OF RAILS AND DEVICE FOR CARRYING OUT SAID METHOD**
VERFAHREN ZUM ALUMINIUM-THERMIT-SCHWEISSEN VON SCHIENEN UND VORRICHTUNG ZUR AUSFÜHRUNG DIESES VERFAHRENS
PROCÉDÉ DE SOUDURE ALUMINOTHERMIQUE DE RAILS ET DISPOSITIF DE MISE EN OEUVRE

(30) Priority: 29.09.2014 RU 2014139049
(43) Date of publication of application: 09.08.2017
(73) Proprietor: Lykov, Aleksei Mikhailovich, Moscow 115522 (RU); Kulchitskiy, Vladimir Antonovich, Moscow 127247 (RU)
(72) Inventor: Lykov, Aleksei Mikhailovich, Moscow 115522 (RU); Kulchitskiy, Vladimir Antonovich, Moscow 127247 (RU)
(74) Representative: Schulz Junghans Patentanwälte PartGmbB
(86) International application number: PCT/RU2015/000300
(87) International publication number: WO 2016/053136

(56) References cited:
- CH-A5- 658 817
- EA-B1- 000 224
- EA-B1- 000 225
- JP-A- S61 176 488
- JP-A- 2003 236 684
- RU-C1- 2 163 184
- RU-C1- 2 163 184
- US-A- 1 747 419

## Description

This invention relates to the field of welding and may be used, for example, when repairing rails of railway tracks.

There is a known method of aluminothermic welding of rails with intermediate casting (RU 2088390, B23K23/00, 27.08.1997), according to which rails ends are installed on the same level with formation of a welding gap between edges thereof, a split mold is positioned around rail ends, rail ends and split mold are heated up to the temperature of 800-1,000°C, molten metal is poured into the split mold from bottom to top with feeding a portion of molten metal into the central section of the welding gap after filling of the split mold bottom. After completion of pouring, additional heating of the whole welding point up to the temperature of at least 800°C is carried out by feeding last portions of molten metal into the space above rail end heads. When molten metal has hardened, the weld top part is removed from the welded rail head.

There is also a known method considered as the prior art (RU 2163184, B23K 23/00, 20.02.2001), wherein rail ends are installed with formation of a welding gap between edges thereof, a split mold is positioned around rail ends in the area of the welding gap, the point of contact between the split mold and rails is sealed, a reaction crucible filled with aluminothermic mixture is installed above the mold, rail ends and split mold are heated up to the temperature of 1,000-1,500°C, aluminothermic mixture is ignited and heated up to formation of molten metal, molten metal is fed from the reaction crucible into the split mold, rail ends and molten metal poured into the welding gap are additionally heated up to the temperature of at least 800°C in the end of feeding of molten metal into the split mold by feeding last portions of molten metal into the space above rail heads, molten metal is cured until hardening thereof, after which the weld and area adjacent thereto are cooled with a compressed air jet down to the temperature of 250-300°C, and then cooled in the air, and the weld top part is removed from the welded rail head.

The disadvantage of the known methods is low quality of the resulting weld due to its imperfect chemical composition and structure negatively affecting stress-related characteristics and accordingly performance indicators, which is conditioned by the following:
- impossibility to achieve optimal and constant composition of metal poured into the weld;
- ingress of slag into the weld;
- impossibility to inject powders into the weld, particularly, nanoparticles (for example, carbides, nitrides and carbonitrides of transition metals) which represent crystallization centers during molten metal cooling and improve the weld structure along with corresponding improvement of stress-related characteristics and performance indicators thereof as a result of chemical interaction with basic reactants (primarily iron oxides);
- low temperature of metal poured into the weld due to heat losses in a crucible and split mold, which results in high viscosity thereof and accordingly occurrence of weld defects in the form of slag inclusions and gas cavities.

The object of this invention is to improve stress-related characteristics of a rail weld and heat-affected zone, including hardness, plasticity and performance indicators, such as resistance to wear and enhancement of performance under conditions of repeated loads, which is solved by way of significant improvement of the metal structure in the rail weld and heat-affected zone.

Solution of the abovementioned object is achieved in that rail ends are installed with formation of the welding gap between edges thereof, the split mold is positioned around rail ends in the area of the welding gap, points of contact between the split mold and rails are sealed with molding material, the reaction crucible is installed above the mold and filled with aluminothermic mixture, rail ends and split mold are heated, aluminothermic mixture is ignited, molten filler metal is fed into the split mold and fills the welding gap from bottom to top, filler metal is cured until hardening and weld formation, after which the weld and heat-affected zone are initially cooled with a compressed air jet down to the temperature of 250-300°C, and then cooled in the air, and the weld top part is removed from the welded rail head, whereas molten filler metal is extracted from an additional container with filler metal having predetermined chemical composition, which is placed in the crucible prior to loading of aluminothermic mixture thereto and heated up to the temperature of 100-700°C, wherein the additional container is provided with a drain neck at the bottom closed by a diaphragm made of melted material, the ratio between weight G1 of filler metal in the additional container and weight G2 of aluminothermic mixture in the crucible is selected within the range of G1/G2= 0.1-0.6, while metal and slag are removed from the reaction crucible to the receptacle.

If necessary, it is possible to add powders of carbides, carbonitrides or nitrides of transition metals into filler metal disposed in the additional container, or into molten filler metal prior to feeding thereof to the mold, as well as nanopowders of carbides, carbonitrides or nitrides of transition metals with metal powder carrier into molten filler metal prior to feeding thereof to the mold.

The invention is explained by the drawings, wherein:
Fig. 1 shows the general view of the apparatus implementing the claimed method,
Fig. 2 shows the section A-A on Fig. 1,
Fig. 3 shows the embodiment of the crucible with the heat exchanger.

The method of aluminothermic welding of rails is performed in the following manner. As in the prior art (RU 2163184), rail ends are precleaned from rust, scale, paint and fatty films using a wire brush and abrasive materials, or by way of oxyacetylene flame calcination with oxygen excess. Welded rail ends are installed into the split mold with formation of the welding gap. The point of contact between the mold and the rail is sealed with molding material which can be, for example, kaolin and asbestos cotton-based material. The reaction crucible is installed above the mold. The additional container with filler metal having a bottom hole for draining of molten metal to the mold is placed in the crucible. The container is made of heat-resistant material, for example, graphite, heat-resistant ceramics, etc., with the drain neck at the bottom closed by the diaphragm made of melted material. Filler metal in the container may have the form of an ingot or powder with required composition, including alloying elements, such as carbides, nitrides, carbonitrides of transition metals evenly distributed along the ingot. The abovementioned powders, as well as nanopowders of carbides, nitrides or carbonitrides of transition metals with metal powder carrier can be added to molten metal flowing from the crucible to the mold.

Rail ends and mold are heated using a gas burner, and the additional container with filler metal is heated up to the temperature of 100-700°C, for example, by gas burner combustion products, prior to loading of aluminothermic mixture into the crucible in order to increase the temperature of metal poured into the mold. Heating temperature is controlled, for example, by a thermocouple. Then aluminothermic mixture is filled into the crucible and ignited. Heat produced as a result of aluminothermic reaction warms up the additional container with filler metal. After melting thereof in the container and heating up to the required temperature, filler metal is poured into the mold and fills the weld from bottom to top (similarly to the prior art), whereafter filler metal is cured until hardening and weld formation, the weld and heat-affected zone are initially cooled with a compressed air jet down to the temperature of 250-300°C, and then cooled in the air, and the weld top part is removed from the welded rail head. Metal and slag are removed from the reaction crucible to the receptacle.

The ratio between weight G1 of filler metal in the additional container and weight G2 of aluminothermic mixture in the crucible is selected within the range of G = G1/G2= 0.1-0.6. When G values are lower than 0.6, the temperature of filler metal poured into the welding gap is decreased significantly, thereby degrading the weld metal structure. When G values are lower than 0.1, weight G2 of aluminothermic mixture required for performance of the technical process is increased significantly, which causes increase in dimensions of the crucible and appreciation of the welding process.

Heating of the container with filler metal by less than 100°C does not allow achieving necessary metal structures in the weld and heat-affected zone, whereas heating of this container by more than 700°C results in complications of process implementation due to limited thermal resistance of materials of the crucible, casting mold and additional container.

The proposed method can be implemented, for example, using the following apparatus.

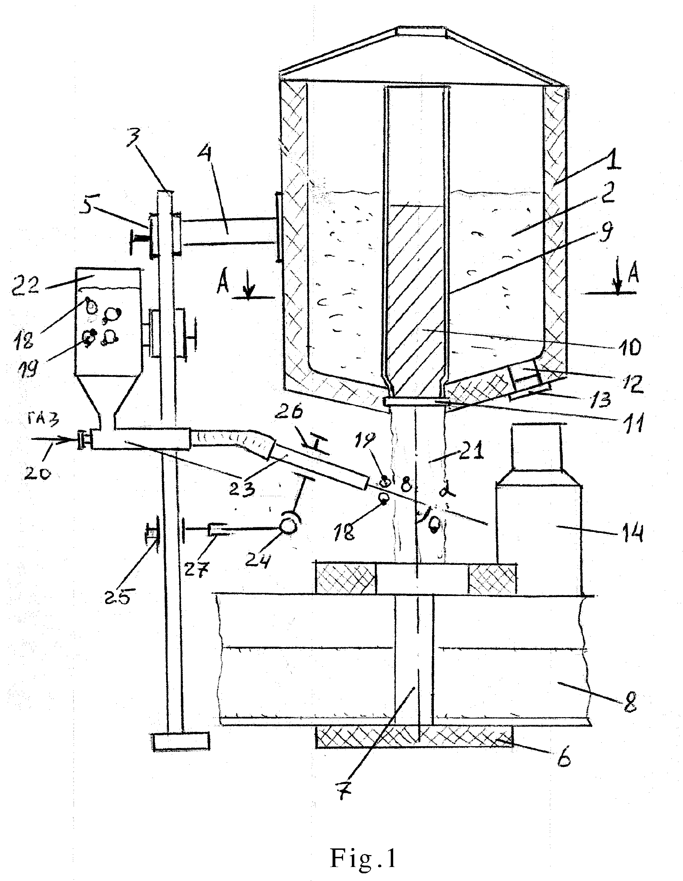

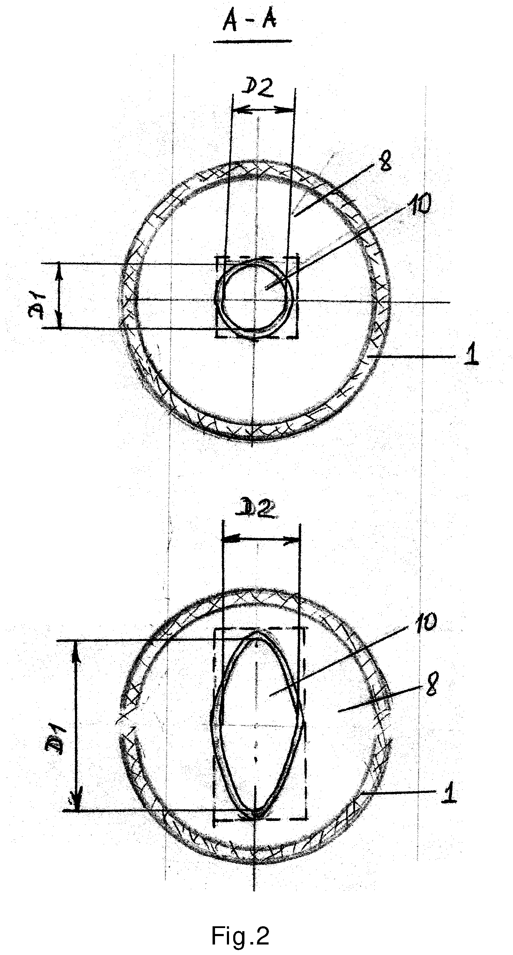

An apparatus for aluminothermic welding of rails (Fig. 1) comprises a crucible 1 with aluminothermic mixture 2 installed using a rod 3 and a holder 4 with possibility of rotation around the rod 3 and vertical movement by means of a guide with a latching mechanism 5 above a split mold 6 which is positioned around a welding gap 7 formed by edges of welded rails 8. An additional container 9 with filler metal 10 having a drain neck, where a diaphragm 11 made of material melted at the corresponding temperature of filler metal 10 in the additional container 9 is installed, is located in the crucible 1. The crucible 1 comprises a nozzle 12 with a valve 13 made of heat-resistant material for draining of metal and slag formed as a result of aluminothermic reaction into a receptacle 14. The ratio between the maximum and minimum size D1/D2 of the cross section of the additional container 9 is equal to 1.0-10.0 (Fig. 2). The ratio of 1.0 corresponds to the cross section, for example, in the form of a circle or a square with the minimum heat exchange surface between aluminothermic mixture 2 and filler metal 10 in the additional container 9, whereas the ratio 10.0 corresponds to the cross section, for example, in the form of a rectangle or an ellipse, which provides increase of the heat exchange surface between aluminothermic mixture and filler metal approximately by 2 times along with relevant increase of filler metal heating rate. Exceeding of the ratio D1/D2 of 10.0 results in that filler metal in the additional container is not melted at points with minimum distance between the surface of the crucible 1 and additional container 9.

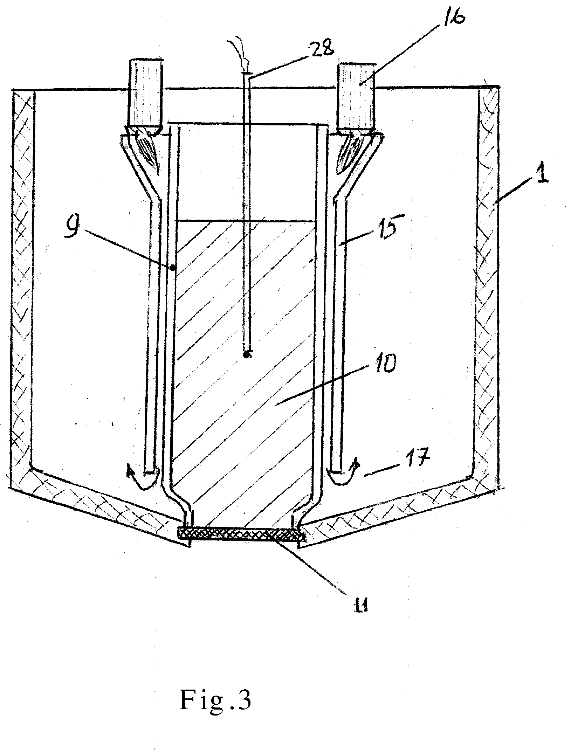

A heat exchanger 15 with gas burners 16 for heating of filler metal 10 in the additional container 9 prior to filling of aluminothermic mixture 2 into the crucible 1 is installed on the outer surface of the additional container 9 (Fig. 3). Heating is carried out by means of combustion products 17 which form in burners 16, for example, propane-air ones.

A device for injection of nanopowders 18 with metal powder carrier 19 of larger size, for example, dozens of micrometers, which are transported by gas 20 to a jet 21 of molten filler metal filled into the mold 6, can be installed on the rod 5. The injection device comprises a dosed supply system 22 and an injection assembly, for example, a nozzle 23 (Fig. 1) capable of being located at the angle of α = 30-150° in relation to the direction of the molten filler metal jet 21 when feeding it to the mold 6. Angular adjustment of the nozzle 23 is performed by means of an articulated joint 24 and guides 25, 26, and 27 with latching mechanisms. When the angle is less than 30° or more than 150°, nanopowders 18 with metal powder carrier 19 do not enter the jet 21 of molten filler metal, thus even distribution thereof throughout the whole molten filler metal is not ensured.

The apparatus for aluminothermic welding of rails operates as follows. The crucible 1 with the additional container 9 comprising filler metal 10 in the form of an ingot or powder is installed using the holder 4 above the split mold 6 which is positioned around the welding gap 7. Burners 16 of the heat exchanger 15 are activated, and preheating of filler metal 10 is performed in the additional container 9 up to the temperature of 100-700°C. Metal temperature is controlled by a thermocouple 28. After removal of the heat exchanger 15 from the crucible 1, aluminothermic mixture 2 is filled thereto and ignited. As a result of exothermic reaction, heat is transferred from aluminothermic mixture 2 to filler metal 10 in the additional container 9, then heats and melts its. When molten metal 10 reaches the required temperature, the diaphragm 11 is melted, and molten metal 10 is poured into the split mold 6 and accordingly to the welding gap 7. Subsequently, filler material is cured until hardening and weld formation, after which the weld and heat-affected zone are initially cooled with a compressed air jet (omitted for clarity) down to the temperature of 250-300°C, and then cooled in the air, and the weld top part is removed from the welded rail head. After removal of metal 10 from the additional container 9, the valve 13 of the crucible 1 is opened, whereby metal and slag produced as a result of exothermic reaction of aluminothermic mixture is drained to the receptacle 14.

The device for injection of nanopowders 18 with metal powder carrier 19 is activated when the jet 21 of molten metal 10 starts flowing to the split mold 6, and nanopowders with powder carrier enter molten metal 10, thereby ensuring improved metal structure in the weld. Upon preliminary injection of corresponding powders into metal 10, for example, into an ingot or powder, the device for injection of nanopowders 18 with metal powder carrier 19 is not installed.

Use of the proposed method and apparatus for aluminothermic welding of rails makes it possible to achieve high quality of the rail weld and heat-affected zone, whereas the weld metal structure is close to the rail metal structure or better than it due to injection of metal poured into the welding gap which has predetermined and strictly defined composition, particularly alloyed with different elements and nanoparticles, with even distribution of all elements throughout the volume of poured metal and in the weld, that results in increase of stress-related characteristics of weld metal and accordingly high performance characteristics of the weld.

## Claims

1. A method of aluminothermic welding of rails, comprising installation of rail ends with formation of a welding gap (7) between edges thereof, positioning of a split mold (6) around rail ends in the area of the welding gap (7), sealing of the point of contact between the split mold (6) and rails with molding material, installation of a reaction crucible (1) above the mold and filling thereof with aluminothermic mixture (2), heating of rail ends and split mold (6), ignition of aluminothermic mixture (2), feeding of molten filler metal (10) into the split mold (6) and filling of the welding gap (7) therewith from bottom to top, curing of filler metal (10) until hardening and weld formation, after which the weld and heat-affected zone are initially cooled with a compressed air jet down to a temperature of 250-300°C, and then cooled in the air, and the weld top part is removed from the welded rail head, **characterized in that** molten filler metal (10) is extracted from an additional container (9) with filler metal (10) having predetermined chemical composition, which is placed in the crucible (1) prior to loading of aluminothermic mixture (2) thereto and heated up to a temperature of 100-700°C, wherein the additional container (9) is provided with a drain neck at a bottom closed by a diaphragm made of melted material, the ratio between weight G1 of filler metal (10) in the additional container (9) and weight G2 of aluminothermic mixture (2) in the crucible (1) is selected within the range of G1/G2= 0.1-0.6, while metal and slag are removed from the reaction crucible (1) to a receptacle (14).

2. The method according to claim 1, **characterized in that** powders of carbides, carbonitrides or nitrides of transition metals are added to filler metal (10) located in the additional container (9).

3. The method according to claim 1, **characterized in that** powders of carbides, carbonitrides or nitrides of transition metals are added to molten filler metal (10) prior to feeding thereof to the mold.

4. The method according to claim 1, **characterized in that** nanopowders (18) of carbides, carbonitrides or nitrides of transition metals with metal powder carrier (19) are added to molten filler metal (10) prior to feeding thereof to the mold.

5. An apparatus for aluminothermic welding of rails, comprising a split mold (6) to be installed around a welding gap (7) formed by edges of welded rails (8), a crucible (1) for disposal of aluminothermic mixture (2) installed above the split mold (6), and a diaphragm made of melted material, **characterized in that** it is equipped with an additional container (9) for disposal of filler metal (10) and a heat exchanger (15) for heating of the additional container (9) with filler metal (10), whereas the additional container (9) is installed in the crucible (1) and has a drain neck at the bottom, wherein said diaphragm is located, and the ratio between the maximum and minimum size of the cross section of the additional container (9) is equal to 1.0-10.0.

6. The apparatus according to claim 5, **characterized in that** the crucible (1) is equipped with a nozzle (12) and a valve (13) for draining of metal and slag to a receptacle (14).

7. The apparatus according to claim 5, **characterized in that** it is equipped with a device for injection of nanopowders (18) with metal powder carrier (19) into the filler metal jet (21), comprising a dosed supply system (22) and an injection assembly made as the nozzle (23) with possibility of allocation at the angle of 30-150° to the direction of the filler metal jet (21) when feeding thereof to the mold.

## Patentansprüche

1. Ein Verfahren zum aluminothermischen Schweißen von Schienen, aufweisend Installation von Schienenenden mit Ausbildung eines Schweißspaltes (7) zwischen deren Kanten, Positionieren von einer geteilten Form (6) um Schienenenden in dem Bereich von dem Schweißspalt (7), Verschließen des Kontaktpunktes zwischen der geteilten Form (6) und Schienen mit Formmaterial, Installation von einem Reaktionstiegel (1) oberhalb der Form und Füllen davon mit aluminothermischem Gemisch (2), Erwärmung von Schienenenden und geteilter Form (6), Entzündung von aluminothermischem Gemisch (2), Zuführung von geschmolzenem Füllmetall (10) in die geteilte Form (6) und Füllen von dem Schweißspalt (7) damit von unten nach oben, Aushärtung vom Füllmetall (10) bis Verfestigung und Schweißnahtbildung, nach der die Schweißnaht und wärmebeeinflusster Bereich zunächst mit einem Druckluftstrahl abgekühlt werden auf eine Temperatur von 250-300°C, und dann gekühlt in der Luft, und der obere Teil der Schweißnaht ist entfernt von dem geschweißten Schienenkopf, **dadurch gekennzeichnet, dass** geschmolzenes Füllmetall (10) ist entnommen aus einem zusätzlichen Behälter (9) mit Füllmetall (10) aufweisend vorgegebene chemische Zusammensetzung, der angeordnet ist in dem Tiegel (1) vor dem Laden vom aluminothermischen Gemisch (2) dazu und Aufheizen auf eine Temperatur von 100-700°C, wobei der zusätzliche Behälter (9) ist versehen mit einem Abflusshals an einem Boden verschlossen durch eine Membran aus geschmolzenem Material, das Verhältnis zwischen Gewicht G1 von Füllmetall (10) in dem zusätzlichen Behälter (9) und Gewicht G2 von aluminothermischem Gemisch (2) in dem Tiegel (1) ist ausgewählt innerhalb des Bereiches von G1/G2=0.1-0.6, während Metall und Schlacke entfernt werden aus dem Reaktionstiegel (1) in ein Gefäß (14).

2. Das Verfahren gemäß Anspruch 1, **dadurch gekennzeichnet, dass** Pulver von Karbiden, Karbonitriden oder Nitriden von Übergangsmetallen hinzugefügt werden zu Füllmetall (10) befindlich in dem zusätzlichen Behälter (9).

3. Das Verfahren gemäß Anspruch 1, **dadurch gekennzeichnet, dass** Pulver von Karbiden, Karbonitriden oder Nitriden von Übergangsmetallen hinzugefügt werden zu geschmolzenem Füllmetall (10) vor dessen Zuführung in die Form.

4. Das Verfahren gemäß Anspruch 1, **dadurch gekennzeichnet, dass** Nanopulver (18) von Karbiden, Karbonitriden oder Nitriden von Übergangsmetallen mit Metallpulverträger (19) hinzugefügt werden zu geschmolzenem Füllmetall (10) vor dessen Zuführung in die Form.

5. Eine Vorrichtung zum aluminothermischen Schweißen von Schienen, aufweisend eine geteilte Form (6) installiert zu werden um einen Schweißspalt (7) gebildet durch Kanten von geschweißten Schienen (8), einen Tiegel (1) zur Abgabe von aluminothermischem Gemisch (2) angebracht oberhalb der geteilten Form (6), und eine Membran aus geschmolzenem Material, **dadurch gekennzeichnet, dass** sie ist eingerichtet mit einem zusätzlichen Behälter (9) zur Abgabe von Füllmetall (10) und einem Wärmetauscher (15) zur Erwärmung von dem zusätzlichen Behälter (9) mit Füllmetall (10), während der zusätzliche Behälter (9) installiert ist in dem Tiegel (1) und einen Abflusshals hat an dem Boden, worin besagte Membran befindlich ist, und das Verhältnis zwischen der maximalen und minimalen Größe von dem Querschnitt von dem zusätzlichen Behälter (9) ist gleich 1.0-10.0.

6. Die Vorrichtung gemäß Anspruch 5, **dadurch gekennzeichnet, dass** der Tiegel (1) ist eingerichtet mit einem Ausguss (12) und einem Ventil (13) zum Ablassen von Metall und Schlacke in ein Gefäß (14).

7. Die Vorrichtung gemäß Anspruch 5, **dadurch gekennzeichnet, dass** sie eingerichtet ist mit einer Einrichtung zur Injektion von Nanopulvern (18) mit Metallpulverträger (19) in den Füllmetallstrahl (21), aufweisend ein dosiertes Versorgungssystem (22) und eine Injektionsanordnung gebildet als die Düse (23) mit Möglichkeit von Zuteilung unter dem Winkel von 30-150° zu der Richtung von dem Füllmetallstrahl (21), wenn Zuführung davon in die Form.

## Revendications

1. Procédé de soudage aluminothermique de rails, comprenant la disposition d'extrémités de rails avec formation d'une fente de soudage (7) entre des bords de ceux-ci, la mise en place d'un moule fendu (6) autour des extrémités de rails dans la zone de la fente de soudage (7), le scellement du point de contact entre le moule fendu (6) et les rails avec un matériau de moulage, la disposition d'un creuset de réaction (1) au-dessus du moule et le remplissage de celui-ci par un mélange aluminothermique (2), le chauffage des extrémités de rails et du moule fendu (6), l'inflammation du mélange aluminothermique (2), la charge du moule fendu (6) en métal d'apport fondu (10) et le comblement par celui-ci de la fente de soudage (7) de bas en haut, le traitement thermique du métal d'apport (10) jusqu'à durcissement et formation d'une soudure, après quoi la soudure et la zone thermiquement affectée sont refroidis une première fois avec un jet d'air comprimé jusqu'à une température de 250-300 °C, puis refroidis à l'air, et la partie supérieure de la soudure est retirée du champignon de rail soudé, **caractérisé en ce que** métal d'apport fondu (10) est extrait d'un conteneur additionnel (9) avec un métal d'apport (10) de composition chimique prédéfinie, mis en place dans le creuset (1) avant le chargement du mélange aluminothermique (2) et chauffé jusqu'à une température de 100-700 °C, le conteneur additionnel (9) étant pourvu d'un col de vidange sur un fond obturé par un diaphragme en matériau fondu, le rapport entre le poids G1 du métal d'apport (10) dans le conteneur additionnel (9) et le poids G2 du mélange aluminothermique (2) dans le creuset (1) étant sélectionné dans la plage G 1/G2= 0,1-0,6, le métal et les scories étant retirées du creuset de réaction (1) vers un réceptacle (14).

2. Procédé selon la revendication 1, **caractérisé en ce que** des poudres de carbures, carbonitrures ou nitrures de métaux de transition sont ajoutés au métal d'apport (10) présent dans le conteneur additionnel (9).

3. Procédé selon la revendication 1, **caractérisé en ce que** des poudres de carbures, carbonitrures ou nitrures de métaux de transition sont ajoutés au métal d'apport fondu (10) avant le chargement de celui-ci dans le moule.

4. Procédé selon la revendication 1, **caractérisé en ce que** des nanopoudres (18) de carbures, carbonitrures ou nitrures de métaux de transition avec un support de poudre métallique (19) sont ajoutés au métal d'apport fondu (10) avant le chargement de celui-ci dans le moule.

5. Dispositif pour le soudage aluminothermique de rails, comprenant un moule fendu (6) à mettre en place autour d'une fente de soudage (7) formée par des bords de rails soudés (8), un creuset (1) pour la disposition de mélange aluminothermique (2) monté au-dessus du moule fendu (6), et un diaphragme en matériau fondu, **caractérisé en ce qu'**il est pourvu d'un conteneur additionnel (9) pour le versement de métal d'apport (10) et d'un échangeur de chaleur (15) pour le chauffage du conteneur additionnel (9) avec le métal d'apport (10), le conteneur additionnel (9) étant mis en place dans le creuset (1) et ayant un col de vidange au fond, où est disposé le diaphragme, et le rapport entre la grandeur maximale et la grandeur minimale de la section transversale du conteneur additionnel (9) étant compris entre 1, 0 et 10,0.

6. Dispositif selon la revendication 5, **caractérisé en ce que** le creuset (1) est pourvu d'une buse (12) et d'une vanne (13) pour l'extraction de métal et de scories vers un réceptacle (14).

7. Dispositif selon la revendication 5, **caractérisé en ce que** celui-ci est pourvu d'un dispositif pour l'injection de nanopoudres (18) avec un support de poudre métallique (19) dans le jet de métal d'apport (21), comprenant un système de dosage d'alimentation (22) et un ensemble d'injection réalisé comme buse (23), avec possibilité de disposition suivant un angle compris entre 30 et 150° dans la direction du jet de métal d'apport (21) pendant son refoulement vers le moule.
